# EUROPÄISCHE PATENTANMELDUNG

(11) **EP 2 036 465 A1**
(43) Veröffentlichungstag der Anmeldung: **18.03.2009**
(21) Anmeldenummer: 08016173.0
(22) Anmeldetag: 15.09.2008
(51) Int. Cl.: A47J 31/06

(54) **Vorrichtung zur drucklosen Zubereitung von Brühgetränken**

(30) Priorität: 13.09.2007 DE 102007043713
(71) Anmelder: Severin Elektrogeräte GmbH, 59846 Sundern (DE)
(72) Erfinder: Fulgoni, Frank, 59846 Sundern (DE)
(74) Vertreter: Köchling, Conrad-Joachim

(57) **Zusammenfassung**

Um eine Vorrichtung zur drucklosen Zubereitung von Brühgetränken, zumindest bestehend aus einem Wasservorratsbehälter gegebenenfalls mit einer Pumpe, einem Heizelement, einem Brühbehälter und einem Auslauf zur Abgabe des Brühgetränkes, sowie ein Verfahren zum Betrieb einer derartigen Vorrichtung zu schaffen, bei der der aufgebrühte Tee nach einer vorbestimmten Zeit aus dem Brühbehälter in ein Gefäß abgegeben wird, so dass ein Überschreiten bzw. Unterschreiten der vorgegebenen Brühzeit verhindert ist, wobei die Vorrichtung kostengünstig und einfach herstellbar ist, wird vorgeschlagen, dass der Brühbehälter (1) einen ersten Füllstand aufweist und mittels der Heißwasserzufuhr bis zu diesem Füllstand befüllbar ist, der unterhalb des Scheitelpunkts eines Saughebers (3) liegt, sowie einen zweiten Füllstand, bis zu welchem er mit Heißwasser befüllbar ist, der oberhalb des Scheitelpunktes des Saughebers (3) liegt.

## Beschreibung

Die Erfindung betrifft eine Vorrichtung zur drucklosen Zubereitung von Brühgetränken, insbesondere Tee, zumindest bestehend aus einem Wasservorratsbehälter, gegebenenfalls mit einer Pumpe, einem Heizelement, einem Brühbehälter und einem Auslauf zur Abgabe des Brühgetränkes sowie ein Verfahren zum Betrieb einer derartigen Vorrichtung.

Im Stand der Technik ist es bekannt, Vorrichtungen zur Zubereitung von Brühgetränken wie Tee zur Verfügung zu stellen, bei denen eine vorbestimmte Menge Wasser eingefüllt, erhitzt und mittels einer einstellbaren Zeitschaltung dem Benutzer kenntlich gemacht wird, dass die vorgestellte Brühzeit erreicht ist, so dass das Brühgetränk per Hand in ein Gefäß umfüllbar ist, wobei der Tee, der sich beispielsweise in einem Teepad, einem Teebeutel oder einer Teebox befindet, innerhalb der Vorrichtung verbleibt, um später aus dieser herausgenommen zu werden.

Bei derartigen Vorrichtungen ist es nachhaltig, dass im Falle der Zeitüberschreitung der Tee weiter brüht, so dass gegebenenfalls bei größerer Zeitüberschreitung der Tee nicht mehr genießbar ist und eine neue Portion Tee aufgebrüht werden muss.

Ausgehend von diesem Stand der Technik liegt der vorliegenden Erfindung die Aufgabe zugrunde, eine Vorrichtung der eingangs genannten Art und ein Verfahren zum Betrieb der Vorrichtung zu schaffen, bei der der aufgebrühte Tee nach einer vorbestimmten Zeit aus dem Brühbehälter in ein Gefäß abgegeben wird, so dass ein Überschreiten bzw. Unterschreiten der vorgegebenen Brühzeit verhindert ist, wobei die Vorrichtung kostengünstig und einfach herstellbar ist.

Zur Lösung dieser Aufgabe schlägt die Erfindung vor, dass der Brühbehälter einen ersten Füllstand aufweist und mittels der Heißwasserzufuhr bis zu diesem Füllstand befüllbar ist, der unterhalb des Scheitelpunkts eines Saughebers liegt, sowie einen zweiten Füllstand, bis zu welchem er mit Heißwasser befüllbar ist, der oberhalb des Scheitelpunktes des Saughebers liegt.

Ein derartiger Brühbehälter kann besonders zur Zubereitung von Brühgetränken wie Tee verwendet werden. Dabei wird in einem Brühbehälter zuerst Tee, beispielsweise in Form eines Teebeutels, einer Teebox oder eines Teepads zugeführt. Nun wird in dem Brühbehälter heißes Wasser eingefüllt, wobei der Füllstand unterhalb des Scheitelpunkts des Saughebers verbleibt. Nach einer vorbestimmten Zeit wird nun eine geringe Menge zusätzlichen Wassers nachgegeben, so dass der Scheitelpunkt des Saughebers überschritten ist, was zur Folge hat, dass nun die gesamte, sich im Brühbehälter befindliche Flüssigkeit aus diesem heraus abfließt.

Hierdurch ist eine kostengünstig und einfach herzustellende Vorrichtung zur Zubereitung von Brühgetränken, wie beispielsweise Tee geschaffen, wobei der Tee direkt aus der Vorrichtung heraus in ein gewünschtes Gefäß, wie beispielsweise eine Tasse abgebbar ist.

Insbesondere kann besonders bevorzugt vorgesehen sein, dass die Heißwasserzufuhr mittels eines Stellgliedes, Ventils, Reglers oder dergleichen derart regelbar ist, dass in einem ersten Zyklus eine Befüllung bis zum ersten Füllstand und gegebenenfalls durch einen Zeitschalter betätigt in einem zweiten Zyklus eine Befüllung bis zum zweiten Füllstand erfolgt.

Weiter kann besonders bevorzugt vorgesehen sein, dass der Saugheber durch ein etwa U-förmiges Rohr gebildet ist, dessen erster Schenkel innerhalb des Brühbehälters und dessen zweiter Schenkel außerhalb des Brühbehälters münden.

Alternativ kann besonders bevorzugt vorgesehen sein, dass der Saugheber durch ein etwa V-förmiges Rohr gebildet ist, dessen erster Schenkel innerhalb des Brühbehälters und dessen zweiter Schenkel außerhalb des Brühbehälters münden.

Zudem kann besonders bevorzugt vorgesehen sein, dass die Mündung des einen Schenkels an oder nahe der tiefsten Stelle des Behälters vorgesehen ist und der zweite Schenkel den Behälterboden durchgreift und dort ausmündet.

Nach der Zuführung einer weiteren geringen Menge heißen Wassers mittels eines Stellgliedes, Ventils, Reglers oder dergleichen überschreitet der Füllstand den Scheitelpunkt des entweder U-förmigen oder V-förmigen Rohres des Saughebers, so dass das fertig gebrühte Getränk in ein außerhalb des Brühbehälters angeordnetes Gefäß ablaufen kann. Dadurch, dass die Mündung des einen Schenkels an oder nahe der tiefsten Stelle des Behälters vorgesehen ist, ist ermöglicht, dass die nahezu gesamte sich in dem Brühbehälter befindliche Menge der Flüssigkeit aus dem Behälter hinaus in das darunter abgestellte Gefäß laufen kann.

Die etwa V-förmige Ausbildung des Rohres ermöglicht eine bessere Abrisskante, so dass ein Nachtropfen von Flüssigkeiten weitestgehend verhindert ist.

Zur lagerichtigen und einfachen Platzierung des eingefüllten Brühgetränkes kann besonders bevorzugt vorgesehen sein, dass innerhalb des Brühbehälters ein Platzhalter für beispielsweise einen Teebeutel, eine Teebox oder ein Teepad angeordnet ist.

Somit ist beispielsweise ein Verstopfen des Schenkels, der an oder nahe der tiefsten Stelle des Behälters vorgesehen ist, verhindert, da der aufzubrühende Tee sich nicht innerhalb des Brühbehälters verteilt, sondern an einer vorbestimmten Stelle angeordnet ist.

Zur Platzierung und Fixierung des in den Brühbehälter eingelegten Teebeutels, der Teebox oder des Teepads kann besonders bevorzugt vorgesehen sein, dass der Platzhalter durch etwa vertikal vom Boden des Brühbehälters abragende Stifte gebildet ist.

Dies stellt eine besonders einfach und kostengünstig herzustellende Möglichkeit zur lagerichtigen Platzierung des eingelegten Teebeutels, der Teebox oder des Teepads dar.

Darüber hinaus kann besonders bevorzugt vorgesehen sein, dass an oder auf dem Brühbehälter ein Deckelteil mit Lochungen und/oder Schlitzen angeordnet ist.

Zudem kann besonders bevorzugt vorgesehen sein, dass an dem Deckelteil Mittel zur Fixierung des in den Brühbehälter eingelegten Teebeutels, der Teebox oder des Teepads, beispielsweise durch von dem Deckelteil in Richtung des eingelegten Teebeutels, der Teebox oder des Teepads abragende Stege, angeordnet sind.

Die Anordnung von Lochungen und/oder Schlitzen innerhalb des Deckelteils ermöglicht das drucklose Aufbrühen des gewünschten Brühgetränkes. Dabei können etwaige Dämpfe durch die Schlitze bzw. Lochungen entweichen.

Die an dem Deckelteil angeordneten Mittel zur Fixierung hindern den eingelegten Teebeutel, die Teebox oder das Teepad daran, durch den Auftrieb des heißen Wassers aufzusteigen und verbessern somit den Brüheffekt.

Schließlich kann besonders bevorzugt vorgesehen sein, dass an der Vorrichtung Mittel zur Vorbestimmung der ersten und zweiten Füllmenge und/oder der Brüh-/Ziehzeit des jeweiligen gewünschten Getränkes angeordnet sind.

Hierdurch ist eine individuelle Brühdauer vom Benutzer wählbar, so dass der Benutzer direkt bestimmen kann, wie lange sein Brühgetränk brühen soll.

Zum Betrieb einer erfindungsgemäßen Vorrichtung schlägt die Erfindung ein Verfahren vor, bei dem von einem Heizelement erhitztes Wasser in einem ersten Schritt in den Brühbehälter bis zu einem Füllstand geringfügig unterhalb des Scheitelpunktes des Saughebers eingefüllt wird, anschließend in einem zweiten Schritt nach Überschreiten einer vorbestimmten Brühzeit eine weitere, geringe Menge Wasser dem Brühbehälter zugeführt wird, so dass der Füllstand den Scheitelpunkt des Saughebers überschreitet und die gesamte Flüssigkeit aus dem Brühbehälter abfließt.

Ein Ausführungsbeispiel der Erfindung ist in der Zeichnung dargestellt und im Folgenden näher beschrieben.

Es zeigt:
- Figur 1: einen erfindungsgemäßen Brühbehälter in Seitenansicht geschnitten;
- Figur 2: einen erfindungsgemäßen Brühbehälter mit V- und U-förmigem Saugheber, in Seitenansicht geschnitten,
- Figur 3: eine erfindungsgemäße Vorrichtung mit Deckelteil in Draufsicht.

In den Figuren ist der Brühbehälter 1 einer Vorrichtung zur drucklosen Zubereitung von Brühgetränken, wie beispielsweise Tee gezeigt. Die Vorrichtung besteht zumindest aus einem Wasservorratsbehälter, gegebenenfalls einer Pumpe, einem Heizelement und einem Brühbehälter 1. Der Brühbehälter 1 weist dabei einen Auslauf 2 zur Abgabe des Brühgetränkes auf.

Erfindungsgemäß weist der Brühbehälter 1 einen ersten Füllstand auf, bis zu dem der Brühbehälter 1 mittels der Heißwasserzufuhr befüllbar ist. Dabei liegt der erste Füllstand unterhalb des Scheitelpunktes eines Saughebers 3. Der Brühbehälter weist ferner einen zweiten Füllstand auf, bis zu welchem er mit Heißwasser befüllbar ist, wobei der zweite Füllstand oberhalb des Scheitelpunktes des Saughebers 3 liegt.

Hierdurch kann mit einfachen Mitteln und damit verbundenen geringen Herstellungskosten eine Vorrichtung zur Zubereitung von Brühgetränken, insbesondere von Tee, geschaffen werden, bei der ein manuelles Umfüllen in ein Trinkgefäß unnötig ist, bei der ein Überschreiten bzw. Unterschreiten einer vorgegebenen Brühzeit verhindert ist.

Die Heißwasserzufuhr ist mittels eines Reglers regelbar, wobei in einem ersten Zyklus eine Befüllung bis zu dem ersten Füllstand und im Ausführungsbeispiel durch einen Zeitschalter betätigt in einem zweiten Zyklus eine Befüllung bis zu dem zweiten Füllstand erfolgt. Somit kann durch den Benutzer eine Zeit vorgegeben werden, die der Tee brühen soll. Sobald die vorgegebene Zeit abgelaufen ist, wird eine definierte Menge heißen Wassers in den Brühbehälter hinzu gegeben, so dass der zweite Füllstand überschritten wird und die gesamte sich innerhalb des Brühbehälters befindliche Flüssigkeit in ein Trinkgefäß abfließen kann.

Somit ist ein Überschreiten oder Unterschreiten einer gewünschten Brühzeit wirksam verhindert.

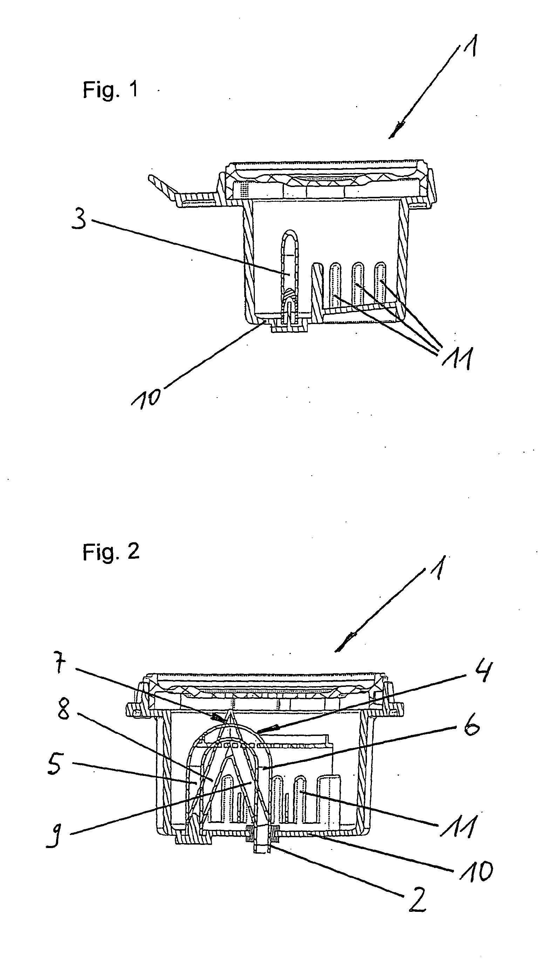

Wie aus den Figuren 1 und 2 ersichtlich, ist der Saugheber 3 durch ein etwa U-förmiges Rohr 4 gebildet, dessen erster Schenkel 5 innerhalb des Brühbehälters 1 und dessen zweiter Schenkel 6 außerhalb des Brühbehälters 1 mündet.

Alternativ und aus der Figur 2 ersichtlich, kann dann der Saugheber 3 durch ein etwa V-förmiges Rohr 7 gebildet sein, dessen erster Schenkel 8 innerhalb des Brühbehälters 1 und dessen zweiter Schenkel 9 außerhalb des Brühbehälters 1 mündet. Der Querschnitt des U-förmigen oder V-förmigen Rohres bestimmt dabei die Ablaufgeschwindigkeit des Getränkes aus dem Brühbehälter 1 in ein darunter gestelltes Gefäß. Die etwa V-förmige Ausbildung des Rohres 7 ermöglicht eine bessere Abrisskante, so dass ein Nachtropfen von Flüssigkeiten weitestgehend verhindert ist.

Wie aus den Figuren 1 und 2 ersichtlich, ist die Mündung des einen Schenkels 5 bzw. 8 nahe der tiefsten Stelle des Behälters 1 vorgesehen. Der zweite Schenkel 6 bzw. 9 durchgreift den Behälterboden 10 und mündet außerhalb des Behälters aus.

Insbesondere hierdurch wird der Saugheber-Effekt gebildet.

Wie insbesondere aus den Figuren 1 und 2 ersichtlich, sind innerhalb des Brühbehälters 1 Platzhalter für einen Teebeutel, eine Teebox oder ein Teepad angeordnet. Die Platzhalter sind durch etwa vertikal vom Boden des Brühbehälters 1 abragende Stifte 11 gebildet. Hierdurch ist beispielsweise ein ungewolltes Verstopfen des ersten Schenkels 5 bzw. 8 des U-förmigen bzw. V-förmigen Rohres verhindert.

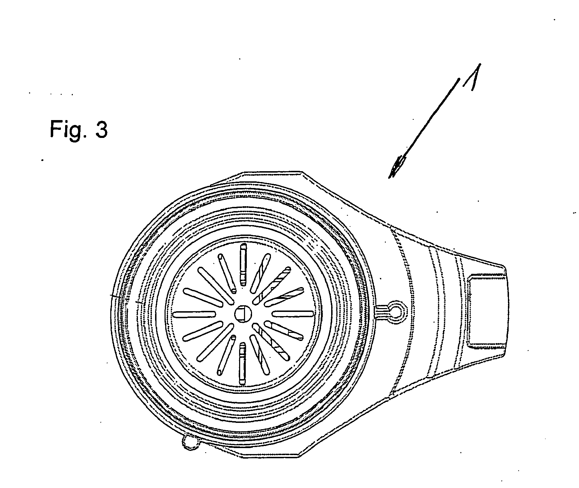

Auf den Brühbehälter 1 ist ein (siehe Figur 3) Deckelteil 12 mit Lochungen 13 und Schlitzen 14 angeordnet. Durch die Lochungen 13 und die Schlitze 14 ist ein Druckausgleich des sich innerhalb des Behälters 1 befindlichen Heißgetränkes jederzeit ermöglicht.

Aus den Figuren nicht ersichtlich sind an dem Deckelteil 12 Mittel zur Fixierung des in den Brühbehälter 1 eingelegten Teebeutels, der Teebox oder des Teepads durch von dem Deckelteil 12 in Richtung des eingelegten Teebeutels, der Teebox oder des Teepads abragende Stege angeordnet. Diese Stege dienen als Niederhalter und hindern den eingelegten Teebeutel, die Teebox oder das Teepad daran, durch den Auftrieb innerhalb des heißen Wassers aufzusteigen.

An der Vorrichtung sind Mittel zur Vorbestimmung der ersten und zweiten Füllmenge und der Brühzeit des jeweiligen gewünschten Brühgetränkes angeordnet.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur drucklosen Zubereitung von Brühgetränken, insbesondere Tee, zumindest bestehend aus einem Wasservorratsbehälter gegebenenfalls mit einer Pumpe, einem Heizelement, einem Brühbehälter und einem Auslauf zur Abgabe des Brühgetränkes, **dadurch gekennzeichnet, dass** der Brühbehälter (1) einen als Auslauf dienenden Saugheber (3) aufweist, dass der Brühbehälter (1) einen ersten Füllstand aufweist und mittels der Heißwasserzufuhr bis zu diesem Füllstand befüllbar ist, der unterhalb des Scheitelpunkts des Saughebers (3) liegt, sowie einen zweiten Füllstand, bis zu welchem er mit Heißwasser befüllbar ist, der oberhalb des Scheitelpunktes des Saughebers (3) liegt.

2. Vorrichtung nach Anspruch 1, **dadurch gekennzeichnet, dass** die Heißwasserzufuhr mittels eines Stellgliedes, Ventils, Reglers oder dergleichen derart regelbar ist, dass in einem ersten Zyklus eine Befüllung bis zum ersten Füllstand und gegebenenfalls durch einen Zeitschalter betätigt, in einem zweiten Zyklus eine Befüllung bis zum zweiten Füllstand erfolgt.

3. Vorrichtung nach Anspruch 1 oder 2, **dadurch gekennzeichnet, dass** der Saugheber (3) durch ein etwa U-förmiges Rohr (4) gebildet ist, dessen erster Schenkel (5) innerhalb des Brühbehälters (1) und dessen zweiter Schenkel (6) außerhalb des Brühbehälters münden.

4. Vorrichtung nach Anspruch 1 oder 2, **dadurch gekennzeichnet, dass** der Saugheber (3) durch ein etwa V-förmiges Rohr (7) gebildet ist, dessen erster Schenkel (8) innerhalb des Brühbehälters (1) und dessen zweiter Schenkel (9) außerhalb des Brühbehälters (1) münden.

5. Vorrichtung nach einem der Ansprüche 3 oder 4, **dadurch gekennzeichnet, dass** die Mündung des einen Schenkels (5,8) an oder nahe der tiefsten Stelle des Behälters (1) vorgesehen ist und der zweite Schenkel (6,9) den Behälterboden (10) durchgreift und dort ausmündet.

6. Vorrichtung nach einem der Ansprüche 1 bis 5, **dadurch gekennzeichnet, dass** innerhalb des Brühbehälters (1) ein Platzhalter für beispielsweise einen Teebeutel, eine Teebox oder ein Teepad angeordnet ist.

7. Vorrichtung nach Anspruch 6, **dadurch gekennzeichnet, dass** der Platzhalter durch etwa vertikal vom Boden des Brühbehälters (1) abragende Stifte (11) gebildet ist.

8. Vorrichtung nach einem der Ansprüche 1 bis 7, **dadurch gekennzeichnet, dass** an oder auf dem Brühbehälter (1) ein Deckelteil (12) mit Lochungen (13) und/oder Schlitzen (14) angeordnet ist.

9. Vorrichtung nach Anspruch 8, **dadurch gekennzeichnet, dass** an dem Deckelteil (12) Mittel zur Fixierung des in den Brühbehälter (1) eingelegten Teebeutels, der Teebox oder des Teepads, beispielsweise durch von dem Deckelteil (12) in Richtung des eingelegten Teebeutels, der Teebox oder des Teepads abragende Stege, angeordnet sind.

10. Vorrichtung nach einem der Ansprüche 1 bis 9, **dadurch gekennzeichnet, dass** an der Vorrichtung Mittel zur Vorbestimmung der ersten und zweiten Füllmenge und/oder der Brüh-/Ziehzeit des jeweiligen gewünschten Getränkes angeordnet sind.

11. Verfahren zum Betrieb einer Vorrichtung nach einem der Ansprüche 1 bis 10, **dadurch gekennzeichnet, dass** von einem Heizelement erhitztes Wasser in einem ersten Schritt in den Brühbehälter (1) bis zu einem Füllstand geringfügig unterhalb des Scheitelpunkts des Saughebers (3) eingefüllt wird, anschließend in einem zweiten Schritt nach Überschreiten einer vorbestimmten Brühzeit eine weitere, geringe Menge Wasser dem Brühbehälter zugeführt wird, so dass der Füllstand den Scheitelpunkt des Saughebers überschreitet und die gesamte Flüssigkeit aus dem Brühbehälter (1) abfließt.

## Geänderte Patentansprüche

### Geänderte Patentansprüche gemäss Regel 137(2) EPÜ.

1. Vorrichtung zur drucklosen Zubereitung von Brühgetränken, insbesondere Tee, zumindest bestehend aus einem Wasservorratsbehälter gegebenenfalls mit einer Pumpe, einem Heizelement, einem Brühbehälter und einem Auslauf zur Abgabe des Brühgetränkes, wobei der Brühbehälter (1) einen als Auslauf dienenden Saugheber (3) aufweist, der Brühbehälter (1) einen ersten Füllstand aufweist und mittels der Heißwasserzufuhr bis zu diesem Füllstand befüllbar ist, der unterhalb des Scheitelpunkts des Saughebers (3) liegt, sowie einen zweiten Füllstand, bis zu welchem er mit Heißwasser befüllbar ist, der oberhalb des Scheitelpunktes des Saughebers (3) liegt. **dadurch gekennzeichnet, dass** die Heißwasserzufuhr mittels eines Stellgliedes, Ventils, Reglers oder dergleichen derart regelbar ist, dass in einem ersten Zyklus eine Befüllung bis zum ersten Füllstand und in einem zweiten Zyklus eine Befüllung bis zum zweiten Füllstand erfolgt.

2. Vorrichtung nach Anspruch 1, **dadurch gekennzeichnet, dass** eine Zeitschalter vorgesehen ist, durch dessen Betätigung die Befüllung im zweiten Zyklus bis zum zweiten Füllstand erfolgt.

3. Vorrichtung nach Anspruch 1 oder 2, **dadurch gekennzeichnet, dass** der Saugheber (3) durch ein etwa U-förmiges Rohr (4) gebildet ist, dessen erster Schenkel (5) innerhalb des Brühbehälters (1) und dessen
